# FASCICULE DE BREVET EUROPEEN

(11) **EP 1 110 174 B1**
(45) Date de publication et mention de la délivrance du brevet: **05.11.2008**
(21) Numéro de dépôt: 00949666.2
(22) Date de dépôt: 07.07.2000
(51) Int. Cl.: G06K 19/077

(54) **TICKET D'ACCES SANS CONTACT ET SON PROCEDE DE FABRICATION**
KONTAKTLOSE EINTRITTSKARTE UND VERFAHREN ZU DEREN HERSTELLUNG
CONTACTLESS ACCESS TICKET AND METHOD FOR MAKING SAME

(30) Priorité: 07.07.1999 FR 9908802
(43) Date de publication de la demande: 27.06.2001
(73) Titulaire: ASK S.A., 06560 Valbonne (FR)
(72) Inventeur: KAYANAKIS, Georges, 06600 Antibes (FR); ROSE, René, F-30000 Nimes (FR)
(86) Numéro de dépôt international: PCT/FR2000/001959
(87) Numéro de publication internationale: WO 2001/004834

(56) Documents cités:
- EP-A- 0 595 549
- EP-A- 0 615 285
- WO-A-97/42598
- DE-A- 4 403 513
- DE-A- 19 845 296

## Description

### Domaine technique

La présente invention concerne les accès à des zones contrôlées dans lesquelles il est fait usage d'un support d'accès sans contact dans la zone contrôlée, et concerne en particulier un ticket sans contact jetable et son procédé de fabrication.

### Etat de la technique

Les supports d'accès à des zones à accès contrôlé telles que les réseaux de transport public comme la RATP ou la SNCF utilisent de plus en plus la technique dite « sans contact » par opposition aux supports classiques avec contact. Ces derniers doivent en effet être insérés dans un lecteur pour réaliser le contact permettant de contrôler la validité du support. Avec le temps, il y a encrassement des balais du lecteur qui entraîne souvent une absence de contact obligeant alors l'usager à s'y reprendre plusieurs fois et donc une perte de temps non négligeable.

L'échange d'informations entre un support sans contact et le lecteur s'effectue de manière générale par couplage électromagnétique à distance entre une première antenne logée dans le support sans contact et une deuxième antenne située dans le lecteur. Le support est muni par ailleurs, d'un module électronique comportant la première antenne connectée à une pastille semi-conductrice ou puce qui contient, entre autres, une partie radio-fréquence (RF), une mémoire dans laquelle sont stockées les informations à fournir au lecteur et les fonctions logiques nécessaires pour élaborer les informations à émettre et traiter les informations reçues.

I1 existe en fait deux groupes d'usagers d'un réseau de transport, les usagers permanents et les usagers occasionnels. Pour le premier groupe, la carte à puce sans contact au format ISO est la solution la plus adaptée dans la mesure où le prix de revient de la carte réparti sur la totalité des voyages effectués sur une longue période restera toujours faible pour l'usager. Mais le prix de revient de la carte devient exorbitant par rapport au coût du voyage pour le deuxième groupe composé d'usagers occasionnels qui seraient dans l'obligation d'acheter une carte pour un seul voyage.

On connait du document DE 44 03 513 A une carte d'une ou plusieurs couches dans laquelle est inséré un module électronique. Le document EP 0 615 285 divulgue un procédé de fabrication de tickets munis de circuits intégrés.

### Exposé de l'invention

C'est pourquoi un des buts de l'invention est de fournir un support d'accès à une zone à accès contrôlé telle qu'un réseau de transport public sous forme d'un ticket jetable, largement biodégradable, très peu coûteux mais possédant les mêmes fonctionnalités qu'une carte d'accès sans contact malgré les dimensions réduites.

Un deuxième but de l'invention est de réaliser un procédé de fabrication d'un ticket d'accès sans contact jetable possédant les mêmes fonctionnalités qu'une carte d'accès sans contact malgré les dimensions réduites.

L'objet de l'invention est donc un ticket permettant d'obtenir l'accès à une zone à accès contrôlé lorsqu'il est présenté sans contact devant un lecteur d'accès à la zone, un tel ticket étant de format Edmonson et comprenant un corps de ticket en papier recouvert sur ses deux faces d'un revêtement de protection. Le corps de ticket en papier dispose d'un évidement traversant dans lequel se trouve un module électronique comprenant un circuit intégré et une antenne, cette dernière étant formée d'au moins une spire obtenue par impression à l'encre sérigraphique de poudre d'argent dans une composition polymérisable avant durcissement par traitement thermique.

Un autre objet de l'invention est un procédé de fabrication de tickets sans contact consistant à préparer une laize ou multibande en papier d'une largeur correspondant à plusieurs largeurs de ticket, faire des évidements traversant la laize destinés à recevoir les modules électroniques des tickets, fendre la laize en plusieurs bandes simples correspondant chacune à une bobine de tickets, et placer consécutivement de chaque cela première couche de revêtement de protection puis la deuxième couche de revêtement de protection après avoir placé les modules électroniques dans les évidements.

Selon une caractéristique de l'invention, une coiffe ayant la même épaisseur que le circuit intégré et comportant un évidement traversant à l'endroit du circuit intégré, est placée sur le module électronique, et le module électronique recouvert de la coiffe est laminé à chaud de manière à réduire la résistance de l'antenne

### Description brève des figures

Les buts, objets et autres caractéristiques de l'invention apparaîtront plus clairement à la lecture de la description détaillée qui suit en référence aux dessins joints dans lesquels :
la figure 1 représente la face imprimée d'un ticket d'accès à un réseau de transport public selon l'invention
la figure 2 représente schématiquement une vue en perspective d'un ticket d'accès selon l'invention,
la figure 3 représente le module électronique, incorporé dans le ticket d'accès selon l'invention,
la figure 4 représente le module électronique vu en perspective lorsque la coiffe est installée sur ledit module,
la figure 5 représente schématiquement l'étape de formation de la multibande de corps de ticket conformément au procédé selon l'invention, et
la figure 6 représente schématiquement l'étape de formation d'une bande de tickets munie des bandes de revêtement de protection selon le procédé de l'invention.

### Description détaillée de l'invention

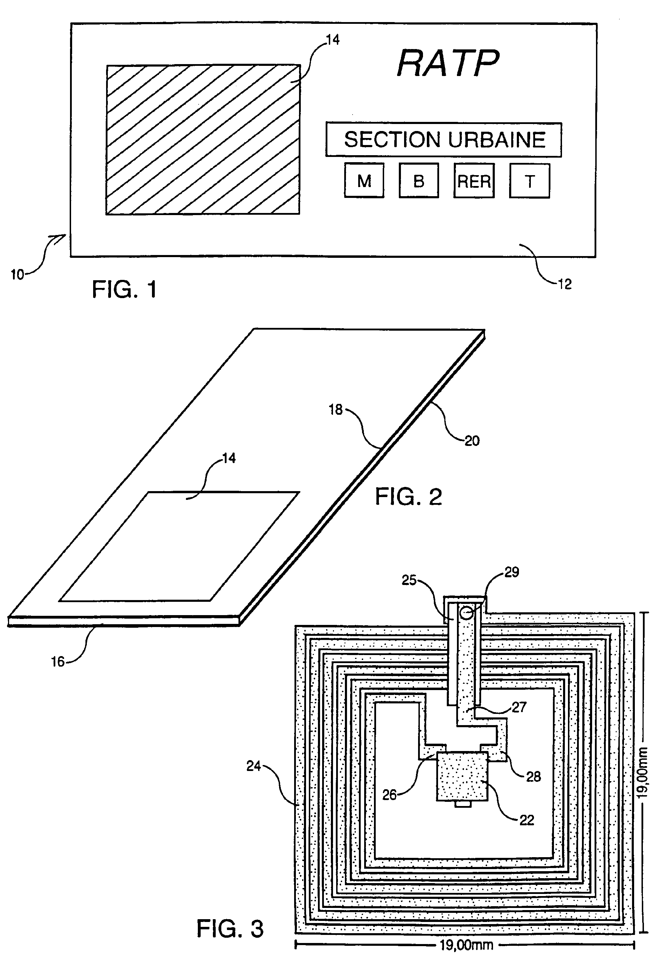

Un ticket d'accès 10 à une zone à accès contrôlé telle que le réseau de métro RATP est illustré sur la figure 1. Il comporte un corps de ticket 12 de format Edmonson 67mm x 30mm et un module électronique 14 comportant les moyens électroniques nécessaires pour qu'un usager qui présente le ticket devant le lecteur adéquat puisse obtenir l'accès au réseau, par exemple l'ouverture d'un portillon à ouverture automatique. Le recto du corps de ticket 12 comporte des informations imprimées telles que des graphismes, logos (RATP), informations alphanumériques, codes barre, etc.

Le corps de ticket représenté en perspective sur la figure 2 est formé d'une couche centrale en papier d'une épaisseur d'environ 0,5mm et de deux fines couches de revêtement ou overlays recto verso 18 et 20 en papier ou en matière plastique telle que du polyester ou du chlorure de polyvinyle d'une épaisseur comprise entre 0,03mm et 0,05mm. L'épaisseur totale du corps de ticket est généralement comprise entre 0,560mm et 0,640mm ou moins.

Le module électronique 14 qui se trouve dans un évidement traversant du corps de ticket est placé en sandwich entre les deux couches de revêtement de protection 18 et 20.

Ce module électronique, illustré sur la figure 3 comprend principalement un support en papier ou en matière plastique d'une épaisseur comprise entre 0,08mm et 0,15mm sur lequel se trouvent un circuit intégré ou puce 22 et une antenne 24. Le circuit intégré a pour fonction de traiter le signal électromagnétique d'une fréquence de 13,56 MHz transmis par le lecteur de ticket et reçu au moyen de l'antenne 24, et de transmettre les informations emmagasinées dans le circuit intégré 22 et destinées à commander l'accès à la zone à accès contrôlé en modulant un signal électromagnétique à 847 KHz utilisé comme porteuse.

L'antenne 24 se présente sous forme d'une spirale carrée de 19mm de côté et comportant au moins une spire et de préférence entre 6 et 10 spires, les spires pouvant être de forme carrée ou circulaire, et a ses deux extrémités connectées au circuit intégré 22 au moyen des connexions 26 et 28. On doit noter que l'inductance de l'antenne 24 a une valeur telle qu'elle forme un circuit résonnant avec le condensateur d'entrée du circuit intégré

La fabrication de l'antenne constitue une caractéristique importante de l'invention puisqu'elle contribue à fournir un ticket de moindre coût. Cette fabrication qui fait appel à la technique de l'impression sérigraphique consiste à imprimer les spires de l'antenne sur un substrat électriquement isolant servant de support d'antenne, de préférence en papier mais qui pourrait être en matière plastique comme on vient de le voir, à l'aide d'une encre constituée de poudre d'argent finement divisé dans une composition polymérisable et un solvant. Après séchage et traitement thermique on obtient la spirale conductrice représentée sur la figure 3 formée d'argent dans un composé polymérisé. Puis on imprime une couche d'encre diélectrique 25 perpendiculairement aux spires. Après traitement thermique de cette encre, on imprime une bande conductrice 27 qui est reliée à l'extrémité 29 de l'antenne et à la borne de connexion 28 qui sert à assurer la liaison électrique avec le circuit intégré, l'autre connexion étant réalisée à l'aide de la borne 26. On doit noter que la largeur du conducteur formant l'antenne 24, la distance entre les spires et le nombre de tours définissent la valeur de l'inductance de l'antenne.

Les antennes peuvent être fabriquées en série en utilisant une bande de support d'antenne et en effectuant les opérations d'impression de l'antenne décrites ci-dessus de façon répétitive. Puis on installe une puce au centre de chaque antenne de la façon illustrée sur la figure 3, la connexion de la puce aux extrémités de l'antenne étant effectuée de préférence à l'aide d'une colle conductrice mais pouvant bien sûr être réalisée par soudage. On peut alors procéder au découpage des modules électroniques.

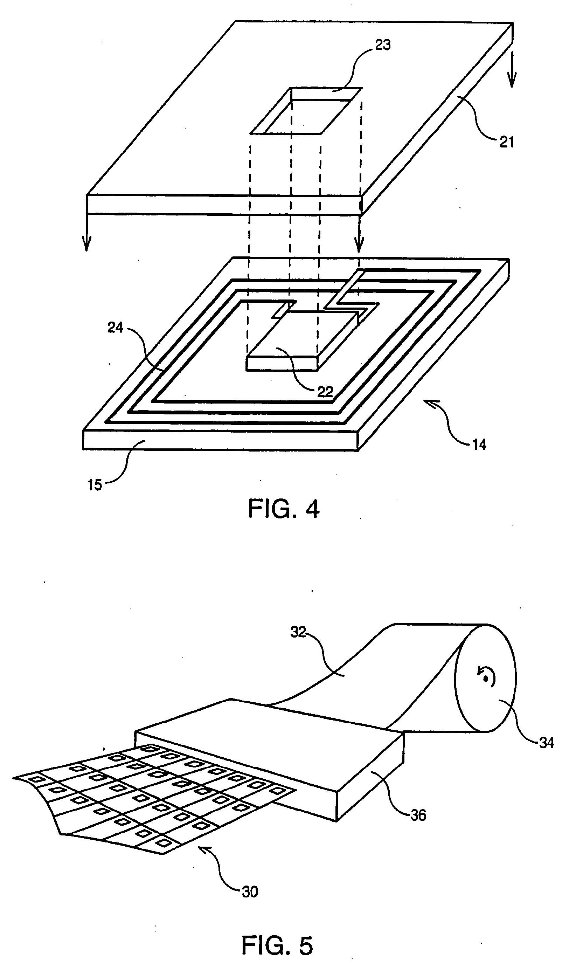

Cependant, une opération importante est réalisée dans le cadre de la présente invention de préférence avant le découpage du module électronique. Si on se réfère à la figure 4, chaque module électronique 14 comprend un support 15 sur lequel a été sérigraphiée une antenne 24 et sur lequel a été installé un circuit intégré ou puce 22. Alors que l'épaisseur de l'antenne 24 est négligeable, il n'en est pas de même pour la puce 22 qui présente une certaine épaisseur. C'est pourquoi une coiffe 21, en papier ou en matière plastique, est installée sur chaque module avant découpage de la bande ou après découpage. Cette coiffe a une épaisseur légèrement supérieure à l'épaisseur de la puce et comporte un évidement traversant 23 ayant des dimensions légèrement supérieures à celles de la puce pour l'insertion de la puce dans l'évidement Ainsi, lorsque la coiffe est installée, le module a une épaisseur quasi constante (sauf à l'endroit de la puce d'épaisseur légèrement inférieure) évitant ainsi une dépression autour de la puce lorsque la couche de revêtement est installée, .

Enfin, une opération essentielle dans le cadre de l'invention est réalisée. Il s'agit d'une lamination à chaud qui permet d'améliorer considérablement les caractéristiques de l'antenne. Il est en effet primordial de réduire le plus possible la résistance de l'antenne de manière à ce qu'une intensité la plus importante possible circule dans l'antenne de façon à obtenir la plus grande puissance d'émission possible à l'aide de l'inductance de l'antenne. Il a été constaté que cette réduction de résistance est obtenue en appliquant une pression comprise entre 20 et 120 kg/cm**²** et principalement en appliquant une température qui est comprise de préférence entre 80° et 170°C, ce qui est réalisé par l'opération de lamination à chaud.

Le procédé de fabrication des tickets commence par la formation d'une laize ou multibande de corps de tickets 30 comme illustré sur la figure 5. Pour ce faire, une bande de papier 32 d'épaisseur voulue et d'une largeur égale à 10 largeurs de tickets (cette largeur pourrait être différente) est dévidé d'une bobine 34 et passe dans une station de formation 36 où la bande de papier 32 est poinçonnée de façon à former des trous débouchant sur les deux faces et destinées à recevoir les modules électroniques, puis imprimée recto verso si nécessaire. La station 36 effectue également la fente de la laize 32 en 10 bandes d'une largeur d'un ticket qui sont enroulées sur des bobines de tickets (non montrées).

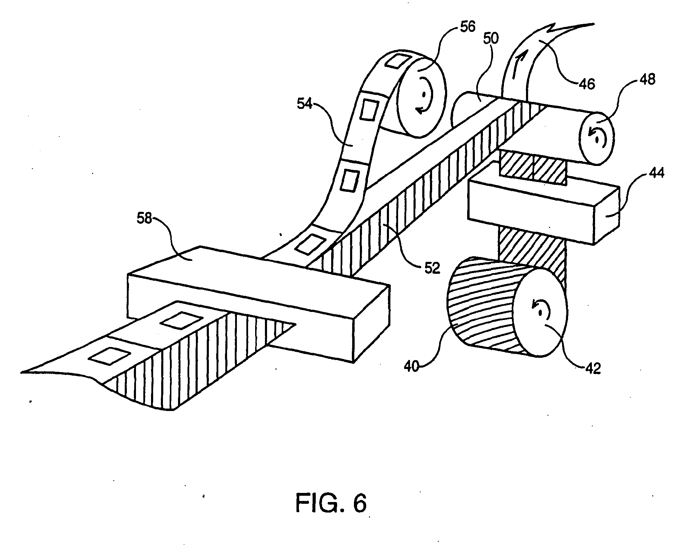

L'étape suivante illustrée sur la figure 6 consiste à appliquer les couches de revêtement de protection ou overlays. On se sert d'une bande 40 en papier ou en matière plastique (polyester, chlorure de polyvinyle ou autre matière plastique) comme définie précédemment fournie à partir d'une bobine 42 et ayant une largeur double de celle des tickets de façon à pouvoir recouvrir le recto et le verso du corps de ticket. Cette bande 40 issue de la bobine 42 est en fait formée de l'overlay comportant une couche d'adhésif et d'une couche mince de papier siliconé.

La bande 40 passe ensuite dans une station de fente 44 ou on procède à la fente du papier siliconé de façon à pouvoir retirer une bande de papier siliconé 46 sur la moitié de la bande 40 après passage sur un rouleau 48. L'overlay dont on a retiré le papier siliconé présente donc une face adhésivée 50 alors que la partie de la bande adjacente 52 reste protégée par du papier siliconé. Une bande de corps de tickets 54 fournie à partir d'une bobine 56 est alors appliquée sur la face adhésivée 50.

L'opération suivante consiste à positionner les modules électroniques tels qu'ils ont été fabriqués en référence à la figure 4 dans les évidements de la bande de corps de tickets. On doit noter que le maintien du module dans son évidement est assuré par la couche d'adhésif se trouvant sur la bande d'overlay 50. En outre, le module électronique muni de sa coiffe est indépendant du reste du ticket et ne présente pas d'axe privilégié de positionnement. Il peut donc être placé dans son évidemment de n'importe quelle façon, c'est à dire de 8 façons possibles. Cette faculté est intéressante dans la mesure où elle n'exige pas de réaliser un procédé méticuleux de positionnement des modules et donc coûteux. En outre, la fixation du module par collage n'est pas indispensable,

Enfin, la partie de l'overlay non découverte 52 est rabattue sur la bande de corps de tickets 54 après que le revêtement de papier siliconé a été retiré.

On doit noter, que bien que le procédé qui vient d'être décrit soit utilisé de préférence, il est possible d'utiliser deux bandes séparées comme couches de revêtement de protection plutôt qu'une seule bande que l'on replie sur la bande de tickets. En outre, on pourrait également utiliser un procédé de collage des overlays sur le corps du ticket par lamination à chaud plutôt que d'utiliser un collage par simple adhésif.

Le ticket d'accès sans contact qui vient d'être décrit ci-dessus présente plusieurs avantages significatifs. Tout d'abord, il présente un faible coût de revient dans la mesure où il fait appel à un procédé de fabrication peu coûteux et utilise des matériaux réduisant considérablement son coût comparativement à la carte sans contact alors qu'il présente les mêmes fonctionnalités que cette dernière. Ensuite, il est biodégradable puisqu'utilisant un support en papier et ceci est primordial puisqu'il s'agit d'un ticket jetable généralement après la première utilisation.

## Revendications

1. Ticket (10) permettant d'obtenir l'accès à une zone à accès contrôlé lorsqu'il est présenté sans contact devant un lecteur d'accès à la zone, ledit ticket étant de format Edmonson et comprenant un corps de ticket (12) en papier recouvert sur ses deux faces d'un revêtement de protection (18, 20), ledit corps de ticket en papier disposant d'un évidement traversant dans lequel se trouve un module électronique (14) comprenant un circuit intégré (22) et une antenne (24), ladite antenne étant formée d'au moins une spire obtenue par impression à l'encre sérigraphique de poudre d'argent dans une composition polymérisable avant durcissement par traitement thermique, **caractérisé en ce que** ledit module électronique (14) comprend en outre une coiffe (21) comportant un évidement dans lequel se trouve ledit circuit intégré (22) de sorte que ledit module a une épaisseur constante que ce soit à l'emplacement dudit circuit intégré (22) ou en dehors.

2. Ticket selon la revendication 1, dans lequel ladite antenne (24) est formée d'un nombre de spires compris entre 6 et 10.

3. Ticket selon la revendication 1 ou 2, dans lequel ladite antenne (24) est formée d'une ou plusieurs spires carrées.

4. Ticket selon la revendications 1, 2, ou 3, dans lequel ledit module électronique (14) est composé d'un support en papier (15) sur lequel l'antenne est obtenue par impression sérigraphique et ledit circuit intégré (22) est fixé entre les extrémités de ladite antenne par soudage ou collage à l'aide d'une colle conductrice.

5. procédé de fabrication de ticket selon l'une des revendications 1 à 4, **caractérisé en ce qu'**il consiste à :
a) préparer une laize (30) ou multibande en papier d'une largeur correspondant à plusieurs largeurs du ticket,
b) faire des évidements traversant ladite laize destinés à recevoir les modules électroniques desdits tickets,
c) fendre ladite laize en plusieurs bandes simples (54) correspondant chacune à une bobine de tickets (56), et
d) placer consécutivement de chaque côté de ladite laize comportant lesdits évidements, la première couche de revêtement de protection, puis la deuxième couche de revêtement de protection après avoir placé les modules électroniques dans lesdits évidements, l'étape d) se faisant de la façon suivante :
d1) préparer une première bande de revêtement de protection (50) comportant un adhésif sur une face recouverte d'un papier siliconé,
d2) retirer ledit papier siliconé (46) de façon à découvrir la face adhésivée,
d3) coller ladite bande simple (54) correspondant à une bobine de tickets et disposant desdits évidements, sur ladite face adhésivée,
d4) placer lesdits modules électroniques dans lesdits évidements, lesdits modules électroniques étant maintenus dans les évidements grâce à l'adhésif de ladite première couche de revêtement de protection, et
d5) recouvrir ladite bande collée sur ladite première couche de revêtement de protection d'une deuxième couche de revêtement de protection (52) disposant d'une face adhésivée.

6. Procédé selon la revendication 5, dans lequel les deux couches de revêtement de protection forment au départ une seule bande (40) de largeur double de ladite bande simple correspondant à une bobine de tickets et disposant d'une face adhésivée recouverte d'un papier siliconé, une bande de papier siliconé (46) étant retirée dans un premier temps de la partie devant constituer la première couche de revêtement de protection pour y coller ladite bande simple (54) et le papier siliconé étant ensuite entièrement retiré de ladite bande de largeur double de sorte que celle-ci puisse être repliée et collée sur ladite bande simple et servir de deuxième couche de revêtement de protection pour cette dernière après que les modules électroniques ont été placés dans lesdits évidements.

7. Procédé selon l'une des revendications 5 ou 6, comportant en outre les étapes suivantes de fabrication desdits modules électroniques préalablement à l'étape c) de placement dans lesdits évidements :
C1) imprimer par sérigraphie ladite antenne (24) sur un support en papier (15),
C2) placer ledit circuit intégré (22) sur ledit support en papier en le connectant entre les extrémités de ladite antenne par collage ou soudage,
C3) installer une coiffe (21) sur ledit module, ladite coiffe ayant la même épaisseur que ledit circuit intégré et comportant un évidement traversant à l'endroit dudit circuit intégré, et
C4) procéder à la lamination à chaud dudit module électronique recouvert de ladite coiffe de manière à réduire la résistance de ladite antenne.

8. Procédé selon la revendication 7, dans lequel l'étape de lamination à chaud est effectuée avec une pression comprise entre 20 et 120 kg/cm² et à une température comprise entre 80° et 170°C.

## Claims

1. A ticket (10) providing access to a zone with controlled access when it is presented without contact in front of a ticket reader authorizing access to the zone, said ticket having an Edmonson format and comprising a paper ticket body (12) covered on both surfaces with a protective coating (18, 20), said paper ticket body being provided with a recess wherein is located an electronic module (14) comprising an integrated circuit (22) and an antenna (24), said antenna being formed by at least one turn obtained by screen printing with silvery powder in a polymerisable composition before being heat-cured;
said ticket being **characterized in that** said electronic module includes an overlay (21) featuring a hole in which said integrated circuit is located so that said module has a constant thickness at either the location of said integrated circuit (22) or on the outside.

2. The ticket according to claim 1 in which said antenna (24) is made up of a number of turns between 6 and 10.

3. The ticket according to claim 1 or 2 in which said antenna (24) is formed by one or more square turns.

4. The ticket according to claim 1, 2, or 3 in which said electronic module (14) is comprised of a paper support (15) on which the antenna is obtained by screen printing and said integrated circuit (22) is fixed between the ends of said antenna by soldering or bonding by means of a conductive adhesive.

5. A fabrication process of ticket according to claim 1 to 4, **characterized in that** it consists in:
a) preparing a paper strip (30) or multi-band having a width corresponding to several ticket widths,
b) making holes which pass through said strip designed to receive the electronic modules of said tickets,
c) slitting said strip into several single strips (54) each corresponding to one reel of tickets (56), and
d) placing consecutively, on each side of said strip with said holes, the first layer of protective coating, then the second layer of protective coating after having inserted the electronic modules in said holes, step d) consists in:
d1) preparing a first protective coating strip (50) having an adhesive on one side covered by backing paper,
d2) removing said backing paper (46) so as to uncover the adhesive face,
d3) bonding said single band (54) corresponding to a reel of tickets and arranging said holes, on said adhesive face,
d4) placing said electronic modules in said holes, said electronic modules being maintained in the holes by the adhesive of said first layer of protective coating, and
d5) covering said band bonded to said first layer of protective coating with a second layer of protective coating (52) having an adhesive face.

6. The process according to claim 5 in which both layers of protective coating initially form a single band (40) measuring the double width of said single band corresponding to a reel of tickets and having an adhesive face covered with backing paper, a band of backing paper (46) being initially removed from the part which will form the first layer of protective coating to affix said single band (54) and the backing paper then being entirely removed from said double width band so that it can be folded over and bonded onto said single band and to serve as a second layer of protective coating for the latter after the electronic modules have been placed in said holes.

7. The process according to claim 5 or 6, also including the following fabrication steps for electronic modules prior to placing the latter into said holes in step c) :
C1) screen printing of said antenna (24) on a paper support (15),
C2) placing said integrated circuit (22) on said paper support while connecting it between the ends of said antenna by bonding or soldering,
C3) installing an overlay (21) onto said module, said overlay having the same thickness as said integrated circuit and featuring a through-hole at the location of said integrated circuit, and
C4) proceeding with the hot lamination of said electronic module covered by said overlay so as to reduce the resistance of said antenna.

8. The process according to claim 7 in which the hot lamination step is performed at a pressure between 20 and 120 kg/cm³ and at a temperature between 80 and 170°C.

## Patentansprüche

1. Fahrkarte (10), die es ermöglicht, Zugang zu einer Zone mit kontrolliertem Zugang zu erhalten, wenn sie kontaktlos vor einem Zugangs-Lesegerät der Zone präsentiert wird, wobei die Fahrkarte ein Edmonson-Format hat und einen Fahrkartenkörper (12) aus Papier aufweist, der auf seinen beiden Seiten mit einem Schutzbelag (18, 20) bedeckt ist, wobei der Fahrkartenkörper aus Papier über eine durchgehende Aussparung verfügt, in der sich ein Elektronikmodul (14) befindet, das eine integrierte Schaltung (22) und eine Antenne (24) aufweist, wobei die Antenne von mindestens einer Windung geformt wird, die durch Drucken mit Siebdruckfarbe aus Silberpulver in einer polymerisierbaren Zusammensetzung vor der Härtung durch Wärmebehandlung erhalten wird, **dadurch gekennzeichnet, dass** das Elektronikmodul (14) außerdem eine Abdeckung (21) aufweist, die eine Aussparung besitzt, in der sich die integrierte Schaltung (22) befindet, so dass das Modul sowohl an der Stelle der integrierten Schaltung (22) als auch außerhalb eine konstante Dicke hat.

2. Fahrkarte nach Anspruch 1, bei der die Antenne (24) von einer Anzahl von Windungen geformt wird, die zwischen 6 und 10 liegt.

3. Fahrkarte nach Anspruch 1 oder 2, bei der die Antenne (24) von einer oder mehreren quadratischen Windungen geformt wird.

4. Fahrkarte nach Anspruch 1, 2 oder 3, bei der das Elektronikmodul (14) aus einem Papierträger (15) besteht, auf dem die Antenne durch Siebdruck erhalten und die integrierte Schaltung (22) durch Schweißen oder Kleben mit Hilfe eines leitenden Klebstoffs zwischen den Enden der Antenne befestigt wird.

5. Herstellungsverfahren einer Fahrkarte nach einem der Ansprüche 1 bis 4, **dadurch gekennzeichnet, dass** es darin besteht:
a) eine Papierbreite (30) oder ein Mehrfachband aus Papier mit einer Breite entsprechend mehreren Breiten der Fahrkarte vorzubereiten,
b) die Papierbreite durchquerende Aussparungen herzustellen, die dazu bestimmt sind, die Elektronikmodule der Fahrkarten aufzunehmen,
c) die Papierbreite in mehrere Einfachbänder (54) aufzuspalten, die je einer Fahrkartenrolle (56) entsprechen, und
d) nacheinander auf jeder Seite der die Aussparungen enthaltenden Papierbreite die erste Schutzbelagschicht und dann die zweite Schutzbelagschicht aufzubringen, nachdem die Elektronikmodule in den Aussparungen angeordnet wurden, wobei der Schritt d) folgendermaßen durchgeführt wird:
d1) Vorbereiten eines ersten Schutzbelagbands (50), das einen Klebstoff auf einer mit einem Silikonpapier bedeckten Seite aufweist,
d2) Entfernen des Silikonpapiers (46), um die mit Klebstoff versehene Seite aufzudecken,
d3) Kleben des einer Fahrkartenrolle entsprechenden und über die Aussparungen verfügenden Einfachbands (54) auf die mit Klebstoff versehene Seite,
d4) Anordnen der Elektronikmodule in den Aussparungen, wobei die Elektronikmodule durch den Klebstoff der ersten Schutzbelagschicht in den Aussparungen gehalten werden, und
d5) Bedecken des auf die erste Schutzbelagschicht geklebten Bands mit einer zweiten Schutzbelagschicht (52), die über eine mit Klebstoff versehene Seite verfügt.

6. Verfahren nach Anspruch 5, bei dem die zwei Schutzbelagschichten zu Beginn ein einziges Band (40) bilden, das doppelt so breit wie das einer Fahrkartenrolle entsprechende Einfachband ist und über eine mit Klebstoff versehene Seite verfügt, die mit einem Silikonpapier bedeckt ist, wobei ein Silikonpapierband (46) in einem ersten Vorgang von dem Bereich entfernt wird, der die erste Schutzbelagschicht bilden soll, um dort das Einfachband (54) aufzukleben, und das Silikonpapier anschließend völlig von dem Band doppelter Breite entfernt wird, damit dieses umgefaltet und auf das Einfachband geklebt werden und als zweite Schutzbelagschicht für dieses letztere dienen kann, nachdem die Elektronikmodule in den Aussparungen angeordnet wurden.

7. Verfahren nach einem der Ansprüche 5 oder 6, das außerdem die folgenden Herstellungsschritte der Elektronikmodule vor dem Schritt c) des Anordnens in den Aussparungen aufweist:
C1) Siebdrucken der Antenne (24) auf einen Papierträger (15),
C2) Anordnen der integrierten Schaltung (22) auf dem Papierträger, indem sie durch Kleben oder Schweißen zwischen den Enden der Antenne angeschlossen wird,
C3) Anordnen einer Abdeckung (21) auf dem Modul, wobei die Abdeckung die gleiche Dicke hat wie die integrierte Schaltung und eine durchgehende Aussparung an der Stelle der integrierten Schaltung besitzt, und
C4) Durchführen des Warmwalzens des mit der Abdeckung bedeckten Elektronikmoduls, um den Widerstand der Antenne zu reduzieren.

8. Verfahren nach Anspruch 7, bei dem der Schritt des Warmwalzens mit einem Druck, der zwischen 20 und 120 kg/cm² liegt, und mit einer Temperatur durchgeführt wird, die zwischen 80° et 170°C liegt.
